# EUROPÄISCHE PATENTANMELDUNG

(11) **EP 4 650 187 A1**
(43) Veröffentlichungstag der Anmeldung: **19.11.2025**
(21) Anmeldenummer: 24176388.7
(22) Anmeldetag: 16.05.2024
(51) Int. Cl.: B44C 5/04, E04F 15/10

(54) **DEKORIERTES WAND- ODER BODENPANEEL**

(71) Anmelder: Akzenta Paneele + Profile GmbH, 56759 Kaisersesch (DE)
(72) Erfinder: HANNING, Hans-Jürgen, 51427 Bergisch Gladbach (DE); HÜLLENKREMER, Felix, 56076 Koblenz (DE)
(74) Vertreter: Michalski Hüttermann & Partner Patentanwälte mbB

(57) **Zusammenfassung**

Die vorliegende Erfindung betrifft ein Wand- oder Bodenpaneel (10), aufweisend einen Kunststoffträger (12), eine mittels Digitaldruck auf den Kunststoffträger (12) aufgebrachte Dekorschicht (14), eine Dekorbeschichtung (20) und eine Deckschicht (16), dadurch gekennzeichnet, dass die Dekorbeschichtung (20) folgendes umfasst:
- eine erste Dekorbeschichtungslage (22) und eine zweite Dekorbeschichtungslage (24), wobei
- in der ersten Dekorbeschichtungslage (22) kovalente Bindungen, die durch Reaktion einer Thiolgruppe und einer Kohlenstoff-Kohlenstoff-Doppelbindung gebildet werden, kovalente Bindungen, die durch Reaktion einer Thiolgruppe und einer Epoxidgruppe gebildet werden, und kovalente Bindungen, die durch eine Reaktion zwischen einer Kohlenstoff-Kohlenstoff-Doppelbindung und einer Epoxidgruppe entstehen, vorliegen, wobei
- die erste Dekorbeschichtungslage (22) kovalente Querverbindungen zwischen in der ersten Dekorbeschichtungslage (22) vorhandenen Verbindungen umfasst, und wobei
- kovalente Bindungen zwischen der ersten Dekorbeschichtungslage (22) und der zweiten Dekorbeschichtungslage (24) vorliegen.

## Beschreibung

Die vorliegende Erfindung betrifft ein Wand- oder Bodenpaneel. Die vorliegende Erfindung betrifft insbesondere ein Wand- oder Bodenpaneel, aufweisend einen Kunststoffträger, eine mittels Digitaldruck auf den Kunststoffträger aufgebrachte Dekorschicht, eine Dekorbeschichtung und eine Deckschicht, wobei eine besonders vorteilhafte Dekorbeschichtung verwendet wird.

Dekorierte Platten sind an sich bekannt und diese werden beispielsweise im Innenausbau als Boden oder Wandbelag genutzt. Unter dem Begriff Wandpaneel sind dabei auch Paneele zu verstehen, welche zur Deckenbekleidung geeignet sind. Die Paneele bestehen üblicherweise aus einem Träger beziehungsweise Kern aus einem festen Material, beispielsweise einem Holzwerkstoff, der auf mindestens einer Seite mit einer Dekorschicht und einer Deckschicht sowie gegebenenfalls mit weiteren Schichten, beispielsweise einer zwischen Dekor- und Deckschicht angeordneten Verschleißschicht, versehen ist. Die Dekorschicht ist üblicherweise eine geruckte Schicht. Die Deckschicht kann beispielsweise eine Lackschicht sein.

Herausfordernd bei derartigen Wand- oder Bodenpaneelen ist es meist, dass die Schichten gut aufeinander haften müssen, wobei ferner eine gute Herstellbarkeit gegeben sein sollte.

WO 2013/167576 A2 beschreibt eine Beschichtung, die insbesondere für Leiterplatten geeignet ist und keinen Hinweis auf eine Anwendung in einem Wand- oder Bodenpaneel liefert.

Aufgabe der Erfindung ist es, wenigstens einen Nachteil des Stands der Technik zumindest teilweise zu überwinden. Insbesondere ist es die Aufgabe der vorliegenden Erfindung ein Wand- oder Bodenpaneel zu schaffen, welches eine hohe Stabilität bei gleichzeitig guter Herstellbarkeit ermöglicht, wobei insbesondere die hohen auf Wand- oder Bodenpaneele einwirkenden Kräfte unproblematisch sind.

Gelöst wird diese Aufgabe durch ein Wand- oder Bodenpaneel mit den Merkmalen des Anspruchs 1. Gelöst wird diese Aufgabe ferner durch eine Verwendung mit den Merkmalen des Anspruchs 12. Bevorzugte Ausgestaltungen der Erfindung sind in den Unteransprüchen, in der Beschreibung oder den Figuren angegeben, wobei weitere in den Unteransprüchen oder in der Beschreibung oder den Figuren beschriebene oder gezeigte Merkmale einzeln oder in einer beliebigen Kombination einen Gegenstand der Erfindung darstellen können, wenn sich aus dem Kontext nicht eindeutig das Gegenteil ergibt. Insbesondere können die nachstehend genannten Mengenangaben und Eigenschaften der jeweiligen Materialien beziehungsweise Substanzen beliebig miteinander kombiniert werden.

Beschrieben wird ein Wand- oder Bodenpaneel, aufweisend einen Kunststoffträger, eine mittels Digitaldruck auf den Kunststoffträger aufgebrachte Dekorschicht, eine Dekorbeschichtung und eine Deckschicht, wobei die Dekorbeschichtung folgendes umfasst:
- eine erste Dekorbeschichtungslage und eine zweite Dekorbeschichtungslage, wobei
- in der ersten Dekorbeschichtungslage kovalente Bindungen, die durch Reaktion einer Thiolgruppe und einer Kohlenstoff-Kohlenstoff-Doppelbindung gebildet werden, kovalente Bindungen, die durch Reaktion einer Thiolgruppe und einer Epoxidgruppe gebildet werden, und kovalente Bindungen, die durch eine Reaktion zwischen einer Kohlenstoff-Kohlenstoff-Doppelbindung und einer Epoxidgruppe entstehen, vorliegen, wobei
- die erste Dekorbeschichtungslage kovalente Querverbindungen zwischen in der ersten Dekorbeschichtungslage vorhandenen Verbindungen umfasst, und wobei
- kovalente Bindungen zwischen der ersten Dekorbeschichtungslage und der zweiten Dekorbeschichtungslage vorliegen.

Es hat sich auf überraschende Weise gezeigt, dass ein derartiges Wand- oder Bodenpaneel gegenüber Lösungen aus dem Stand der Technik deutliche Vorteile aufweist, insbesondere hinsichtlich der auf Wand- oder Bodenpaneele einwirkende Belastungen.

Unter dem Begriff "dekoriertes Wand- oder Bodenpaneel" beziehungsweise "Dekorpaneel" sind im Sinne der Erfindung insbesondere Wand-, Decken, Tür- oder Bodenpaneele zu verstehen, welche ein auf eine Trägerplatte aufgebrachtes eine Dekorvorlage nachbildendes Dekor aufweisen. Dekorpaneele werden dabei in vielfältiger Weise sowohl im Bereich des Innenausbaus von Räumen als auch zur dekorativen Verkleidung von Bauten, beispielsweise im Messebau, verwendet. Eine der häufigsten Einsatzbereiche von Dekorpaneelen ist deren Nutzung als Fußbodenbelag. Die Dekorpaneele weisen dabei vielfach ein Dekor auf, welches einen Naturwerkstoff nachempfinden soll.

Beispiele für solche nachempfundenen Naturwerkstoffe beziehungsweise Dekorvorlagen sind Holzarten wie beispielsweise Ahorn, Eiche, Birke, Kirsche, Esche, Nussbaum, Kastanie, Wenge oder auch exotische Hölzer wie Panga-Panga, Mahagoni, Bambus und Bubinga. Darüber hinaus werden vielfach Naturwerkstoffe wir Steinoberflächen oder Keramikoberflächen nachempfunden.

Das beschriebene Wand- oder Bodenpaneel, weist eine Struktur mit einem Kunststoffträger, einer mittels Digitaldruck auf den Kunststoffträger aufgebrachten Dekorschicht, einer Dekorbeschichtung und einer Deckschicht auf. Beispielsweise kann das Wand- oder Bodenpaneel beziehungsweise seine Struktur aus diesen Bestandteilen bestehen.

Unter einem "Träger" kann insbesondere eine in einem fertig gestellten Paneel als Kern beziehungsweise als Basislage dienende Lage verstanden werden, die insbesondere einen Naturstoff, wie etwa einen Holzwerkstoff, einen Faserwerkstoff oder einen Werkstoff umfassend einen Kunststoff aufweisen kann. Beispielsweise kann der Träger dem Paneel bereits eine geeignete Stabilität verleihen oder zu dieser beitragen. Unter einem Kunststoffträger ist dabei ein Träger zu verstehen, der zumindest zum Teil aus einem Kunststoff aufgebaut ist. Beispielsweise kann der Träger aus einem Matrixmaterial und einem Feststoffmaterial aufgebaut sein, beispielsweise bestehen, wobei das Matrixmaterial einen Kunststoff umfassen kann und wobei das Feststoffmaterial ein anorganisches Material umfassen kann. Dabei kann der Träger frei sein von einem Holzwerkstoff beziehungsweise von Holz. Unter einem Kunststoffträger ist ferner grundsätzlich ein Träger zu verstehen, der einen Kunststoff in seinem trägermaterial aufweist, also zumindest zum teil aus einem Kunststoff ausgebildet ist. Insbesondere weist der Kunststoffträger einen Kunststoff an seiner mit einem Dekor zu versehenen Oberfläche auf.

Der Träger kann als Kunststoff ein Trägermaterial auf Basis eines Kunststoffs, eines Compounds auf Basis anorganischer Füllstoffe oder eines Holz-Kunststoff-Komposit-Werkstoffs (WPC) aufweisen. Beispielsweise kann die geschmolzene Polymermasse und damit auch die Trägerplatte im Wesentlichen aus einem thermoplastischen, elastomeren oder duroplastischen Kunststoff ausgebildet sein. Des Weiteren sind Recyclingwerkstoffe aus den genannten Materialien im Rahmen des erfindungsgemäßen Verfahrens einsetzbar. Bevorzugt als Polymere können dabei insbesondere thermoplastische Kunststoffe, wie Polyvinylchlorid, Polyolefine (beispielsweise Polyethylen (PE), Polypropylen (PP), Polyamide (PA), Polyurethane (PU), Polystyrol (PS), Acrylnitril-Butadien-Styrol (ABS), Polymethylmethacrylat (PMMA), Polycarbonat (PC), Polyethylenterephthalat (PET), Polyetheretherketon (PEEK) oder Mischungen oder Co-Polymerisate diese. Dabei können unabhängig von dem Grundmaterial des Trägers beispielsweise Weichmacher vorgesehen sein, die etwa in einem Bereich von ≥ 0 Gew.-% bis ≤ 20 Gew.-%, insbesondere ≤ 10 Gew.-%, vorzugsweise ≤ 7 Gew.-%, beispielsweise in einem Bereich von ≥ 5 Gew.-% bis ≤ 10 Gew.-% vorliegen können. Geeignete Weichmacher umfassen etwa den unter der Handelsbezeichnung "Dinsch" von der Firma BASF vertriebenen Weichmacher. Ferner können als Ersatz für herkömmliche Weichmacher Copolymere, wie etwa Acrylate oder Methacrylate oder Blends mit thermoplastischen Elastomeren (TPEs) vorgesehen sein.

Beispielsweise kann es bevorzugt sein, dass der Träger ein Trägermaterial umfasst, wobei das Trägermaterial ein Matrixmaterial und ein Feststoffmaterial aufweist, wobei das Matrixmaterial in einer Menge, bezogen auf das Trägermaterial, von ≥ 25 Gew.-% bis ≤ 55 Gew.-% vorliegt und wobei das Feststoffmaterial in einer Menge, bezogen auf das Trägermaterial, von ≥ 45 Gew.-% bis ≤ 75 Gew.-% vorliegt, und wobei das Matrixmaterial und das Feststoffmaterial gemeinsam, bezogen auf das Trägermaterial, in einer Menge von ≥ 95 Gew.-% vorliegen.

Das Feststoffmaterial ist dabei bevorzugt zu wenigstens 50 Gew.-%, insbesondere zu wenigstens 80 Gew.-%, beispielsweise zu 100%, bezogen auf das Feststoffmaterial, durch Talkum gebildet. Unter Talkum wird dabei in an sich bekannter Weise ein Magnesiumsilikathydrat verstanden, welches beispielsweise die chemische Summenformel Mg₃[Si₄O₁₀(OH)₂] aufweisen kann. Somit ist der Feststoffanteil vorteilhafter Weise zumindest durch einen Großteil aus dem mineralischen Stoff Talkum gebildet, wobei dieser Stoff etwa als Pulverform eingesetzt werden kann beziehungsweise in dem Trägermaterial in Form von Partikeln vorliegen kann. Grundsätzlich kann das Feststoffmaterial aus einem pulverförmigen Feststoff bestehen.

Alternativ oder zusätzlich kann es bevorzugt sein, dass das Feststoffmaterial zu wenigstens 50 Gew.-% bezogen auf das Feststoffmaterial, gebildet ist aus einer Feststoffzusammensetzung bestehend aus wenigstens einem ersten Schichtsilikatpulver und einem zweiten Schichtsilikatpulver.

Bevorzugt kann es vorgesehen sein, dass Talkum in Form von Partikeln vorliegt, die eine Partikelgröße D₅₀ aufweisen in einem Bereich von ≥ 2µm bis ≤ 7µm, beispielsweise von ≥ 3µm bis ≤ 6µm, vorzugsweise in einem Bereich von ≥ 4µm bis ≤ 5µm, beispielsweise von 4,5 µm, und/oder dass das Talkum in Form von Partikeln vorliegt, die eine Partikelgröße D₉₈ aufweisen in einem Bereich von ≥ 10µm bis ≤ 30µm, vorzugsweise in einem Bereich von ≥ 15µm bis ≤ 20µm, beispielsweise von 17 µm. Zur Bestimmung der Partikelgrößenverteilung kann auf die allgemein bekannten Verfahren, wie beispielsweise die Laserdiffraktometrie, zurückgegriffen werden.

Das Matrixmaterial dient insbesondere dazu, bei dem fertig hergestellten Träger das Feststoffmaterial aufzunehmen beziehungsweise einzubetten. Das Matrixmaterial weist dabei einen Kunststoff oder eine Kunststoffmischung auf. Insbesondere mit Bezug auf das Herstellungsverfahren, etwa durch Pressen oder Extrudieren, kann es vorteilhaft sein, dass das Matrixmaterial einen thermoplastischen Kunststoff aufweist. Dadurch wird es ermöglicht, dass das Trägermaterial beziehungsweise ein Bestandteil des Trägermaterials einen Schmelzpunkt oder einen Erweichungspunkt aufweist, um das Trägermaterial in einem weiteren Verfahrensschritt durch Hitzeeinwirkung zu Formen. Das Matrixmaterial kann insbesondere aus einem Kunststoff beziehungsweise einem Kunststoffgemisch und gegebenenfalls einem Haftvermittler bestehen. Bevorzugt können diese Komponenten zumindest 90Gew.-%, besonders bevorzugt zumindest 95 Gew.-%, insbesondere wenigstens 99 Gew.-% des Matrixmaterials ausmachen.

Das Matrixmaterial kann zu wenigstens 50 Gew.-%, beispielsweise zu wenigstens 90 Gew.-%, bezogen auf das Matrixmaterial, gebildet ist durch eine Kunststoffzusammensetzung, insbesondere umfassend Polypropylen oder Polyethylen, beispielsweise bestehend aus einem Homopolymer und wenigstens einem ersten Copolymer und einem zweiten Copolymer.

Ferner kann es bevorzugt sein, dass das Matrixmaterial zu wenigstens 50 Gew.-%, beispielsweise zu wenigstens 90 Gew.-%, aus Polyethylen oder Polypropylen gebildet ist.

In Abhängigkeit des gewünschten Anwendungsgebietes und der gewünschten Eigenschaften des Paneels können die Anteile an Matrixmaterial beziehungsweise Feststoffmaterial wählbar sein. Dadurch kann eine gute Adaptierbarkeit an das gewünschte Anwendungsgebiet möglich werden. Grundsätzlich kann es jedoch bevorzugt sein, dass der Anteil des Feststoffmaterials kleiner oder bevorzugt größer oder gleich dem Anteil des Matrixmaterials ist.

Mit Bezug auf das Trägermaterial ist es weiterhin vorgesehen, dass das Matrixmaterial und das Feststoffmaterial gemeinsam, bezogen auf das Trägermaterial, in einer Menge von ≥ 95 Gew.-%, insbesondere ≥ 99 Gew.-%, vorliegen. In anderen Worten kann es vorgesehen sein, dass neben dem Feststoffmaterial und dem Matrixmaterial in dem Trägermaterial weitere Substanzen lediglich in einem Anteil, bezogen auf das Trägermaterial, von < 5 Gew.-%, vorzugsweise von < 1 Gew.-% vorliegen. Somit kann es vorteilhaft sein, dass das Trägermaterial zu einem Großteil aus dem Feststoffmaterial und dem Matrixmaterial besteht. Besonders bevorzugt kann es vorgesehen sein, dass das Matrixmaterial und das Feststoffmaterial gemeinsam, bezogen auf das Trägermaterial, in einer Menge von 100 Gew.-%, vorliegen, das Trägermaterial somit aus dem Matrixmaterial und dem Feststoffmaterial besteht.

Durch eine Beschränkung der Materialien des Trägermaterials und damit durch eine geringe Anzahl an Materialien zum Herstellen des Trägers kann der Träger besonders kostengünstig erzeugbar sein. Darüber hinaus kann die Prozessführung der Herstellung eines Trägers beziehungsweise eines Paneels sehr einfach sein, so dass auch die Herstellung einfach und kostenlos möglich ist. Ein vorbeschriebenes Trägermaterial bietet weiterhin insbesondere den Vorteil, ein Paneel mit einer guten Feuchteresistenz zu ermöglichen. Insbesondere kann unter Verwendung eines Trägermaterials, wie dies vorstehend beschrieben ist, signifikant reduziert oder sogar vollständig verhindert werden, dass ein aus dem Trägermaterial hergestelltes Paneel bei Feuchteeinwirkung aufquillt. Ferner kann auch eine hitzebedingte Ausdehnung verhindert oder zumindest signifikant reduziert werden. Dadurch wird es möglich, dass ein Verlegen beziehungsweise Anbringen von mit dem Trägermaterial hergestellten Paneelen deutlich vereinfacht wird und/oder dass Probleme nach dem Verlegen beziehungsweise Anbringen der Paneele deutlich reduziert werden. Dadurch, dass das Matrixmaterial insbesondere einen Kunststoff, wie etwa einen thermoplastischen Kunststoff, aufweist, kann es trotz der hohen Stabilität ermöglicht werden, dass aus dem Trägermaterial erzeugte Paneele sehr elastisch beziehungsweise federnd sein können, was einen komfortablen Eindruck beim Begehen erlaubt und ferner die auftretenden Geräusche bei einem Begehen im Vergleich zu herkömmlichen Materialien reduzieren kann, somit ein verbesserter Trittschall realisierbar sein kann.

Auf dem Träger ist ein Dekor aufgebracht, wobei das Dekor als eine mittels Digitaldruck auf den Kunststoffträger aufgebrachte Dekorschicht vorgesehen ist. Dabei kann das Dekor unmittelbar auf dem Träger oder auf einer zwischen dem Träger und dem Dekor angeordneten Schicht vorgesehen sein.

Beispielsweise kann, um eine Dekorvorlage auf besonders detailgetreue und hochgenaue Weise in dreidimensionaler Form durch das Dekor zu imitieren beziehungsweise nach zu empfinden, das Dekor vorlagenidentisch aufgebracht werden. Insbesondere können die dreidimensionalen Dekordaten bereitgestellt werden durch ein dreidimensionales Abtasten der Dekorvorlage mittels elektromagnetischer Strahlung, beispielsweise durch einen dreidimensionalen Scanner (3D-Scanner). Dabei können eine Mehrzahl an Dekorschichten mit zumindest teilweise unterschiedlichem Flächenauftrag auf Basis bereitgestellter dreidimensionaler Dekordaten sukzessive aufgebracht wird.

Ferner kann die Dekorschicht oder können die können die Dekorteilschichten aus einer insbesondere strahlungshärtbaren Farbe und/oder Tinte ausgebildet werden. Beispielsweise kann eine UV-härtbare Farbe oder Tinte verwendet werden. In dieser Ausgestaltung kann eine besonders detailgetreue und übereinstimmende Nachbildung der Dekorvorlage erreichbar sein. Zum einen kann auf diese Weise ohne das Vorsehen weiterer Maßnahmen hochgenau eine Synchronpore erzielbar sein. Eine Synchronpore kann dabei insbesondere eine Pore oder eine andersartige Struktur sein, welche räumlich etwa in der Deckschicht exakt dort angeordnet ist, wo sie optisch dargestellt ist durch ein mit dem optischen Dekormerkmalen übereinstimmenden haptischen Strukturierung. Darüber hinaus weisen Dekorvorlagen, wie beispielsweise Holzwerkstoffe, oftmals eine Variation des Farbeindrucks nicht nur entlang ihrer Breite beziehungsweise Länge sondern ebenfalls entlang ihrer Tiefe auf. Auch dieser Farbeindruck beziehungsweise Farbverlauf kann insbesondere in dieser Ausgestaltung besonders detailgetreu nachempfunden werden, was auch den Gesamteindruck des Paneels noch identischer erscheinen lässt. Dabei lässt sich insbesondere dann, wenn die verwendete Farbe beziehungsweise Tinte strahlungshärtbar ist, eine besonders schnelle Verfestigung erreichen, wodurch die Mehrzahl an Schichten schnell aufeinander aufbringbar sein können, was auch den Gesamtprozess in einer geringeren Zeit realisierbar und damit besonders kostengünstig gestalten kann.

Unter dem Begriff strahlungshärtbare Farbe ist dabei im Sinne der Erfindung eine binde- und/oder füllmittelmittelhaltige sowie Farbpigmente aufweisende Zusammensetzung zu verstehen, welche induziert durch elektromagnetische Strahlung geeigneter Wellenlänge, wie beispielsweise UV-Strahlung oder Elektronenstrahlung, zumindest teilpolymerisiert werden kann.

Unter dem Begriff strahlungshärtbare Tinte ist dabei entsprechend im Sinne der Erfindung eine im Wesentlichen Füllmittel freie, Farbpigmente aufweisende Zusammensetzung zu verstehen, welche induziert durch elektromagnetische Strahlung geeigneter Wellenlänge, wie beispielsweise UV-Strahlung oder Elektronenstrahlung, zumindest teilpolymerisiert werden kann.

Grundsätzlich kann die Dekorschicht, etwa unter Aufbringen einer Mehrzahl an Dekorteilschichten, durch ein Laserdruckverfahren aufgebracht werden.

Dabei können die Dekorschichten jeweils in Dicken von ≥ 5µm bis ≤ 10µm aufgebracht werden.

Gegebenenfalls kann vor dem Aufbringen der Dekorschicht zusätzlich noch ein Dekoruntergrund auf zumindest einen Teilbereich des Trägers aufgebracht werden. Ferner können weitere optionale Schichten, wie beispielsweise ein Dekoruntergrund oder eine Primerschicht auf den Träger aufgebracht werden. Ein Dekoruntergrund kann beispielsweise zunächst einen Primer, insbesondere für Druckverfahren, etwa in einer Dicke von ≥ 10 µm bis ≤ 60 µm, umfassen. Dabei kann als Primer eine flüssige strahlungshärtende Mischung auf Basis eines Urethans oder eines Urethanacrylats, gegebenenfalls mit einem oder mehreren von einem Photoinitiator, einem Reaktivverdünner, einem UV-Stabilisator, einem Rheologiemittel wie einem Verdicker, Radikalfänger, Verlaufshilfsmittel, Entschäumer oder Konservierungsmittel, Pigment und/oder einem Farbstoff eingesetzt werden.

Die Verwendung strahlungshärtbarer Primer auf Basis von Urethanacrylaten ermöglicht in besonders vorteilhafter Weise eine sich umgehend an den Auftrag und die strahlungsinduzierte Härtung der Primerschicht anschließende Aufbringung eines Dekors, beispielsweise mittels Digitaldrucktechnik. Dabei sorgt die Primerschicht für eine gute Haftung des aufgebrachten Dekors auf der mit dem Primer beschichteten Trägeroberfläche.

Des Weiteren kann der Träger insbesondere vor dem Aufbringen der Dekorschicht elektrostatische entladen werden. Dies kann insbesondere dazu dienen, das Auftreten von Unschärfen im Laufe der Dekoraufbringung zu vermeiden. Dies ist insbesondere für Druckverfahren zum Aufbringen der Dekorschichten geeignet, da die sich im Laufe des Produktionsprozesses aufbauende elektrostatische Ladung in den zu bedruckenden Trägern zu einer Ablenkung der Farb- bzw. Tintentropfen auf ihrem Weg vom Druckkopf zur der zu bedruckenden Oberfläche führt. Die so hervorgerufene Ungenauigkeit des Farbauftrags führt zu der wahrnehmbaren Unschärfe des Druckbildes.

Erfindungsgemäß ist ferner eine vorteilhafte Dekorbeschichtung vorgesehen. Unter einer Dekorbeschichtung soll im Sinne der vorliegenden Erfindung insbesondere eine Beschichtung zu verstehen sein, welche unmittelbar mit dem Dekor in Kontakt kommt und etwa als Beschichtung zum Aufbringen des Dekors, also insbesondere als Druckuntergrund, vorgesehen ist, oder auf dem Dekor vorliegt und dieses somit zumindest zum Teil, beispielsweise vollständig, abdeckt und damit als Zwischenschicht zwischen dem mittels Digitaldruck aufgebrachten Dekor und der nachfolgend beschriebenen Deckschicht dient, wie dies nachfolgend in größerem Detail beschrieben ist.

Dabei umfasst die Dekorbeschichtung Folgendes:
- eine erste Dekorbeschichtungslage und eine zweite Dekorbeschichtungslage, wobei
- in der ersten Dekorbeschichtungslage kovalente Bindungen, die durch Reaktion einer Thiolgruppe und einer Kohlenstoff-Kohlenstoff-Doppelbindung gebildet werden, kovalente Bindungen, die durch Reaktion einer Thiolgruppe und einer Epoxidgruppe gebildet werden, und kovalente Bindungen, die durch eine Reaktion zwischen einer Kohlenstoff-Kohlenstoff-Doppelbindung und einer Epoxidgruppe entstehen, vorliegen, wobei
- die erste Dekorbeschichtungslage kovalente Querverbindungen zwischen in der ersten Dekorbeschichtungslage vorhandenen Verbindungen umfasst, und wobei
- kovalente Bindungen zwischen der ersten Dekorbeschichtungslage und der zweiten Dekorbeschichtungslage vorliegen.

Wie vorstehend beschrieben ist die Dekorbeschichtung aus einer ersten Dekorbeschichtungslage und einer zweiten Dekorbeschichtungslage aufgebaut, besteht beispielsweise aus diesen beiden Lagen. Wesentlich ist es dabei, dass unter Verwendung eines Thiols Thiol-En-Bindungen in der ersten Dekorbeschichtungslage vorliegen und dass ferner die erste Dekorbeschichtungslage und die zweite Dekorbeschichtungslage durch entsprechende kovalente Bindungen miteinander verbunden sind. Dadurch kann eine sehr hohe Stabilität beziehungsweise können sehr gute Haftungseigenschaften erzielt werden. Diese halten in überraschender Weise auch der Beanspruchung von Wand- oder Bodenpaneelen stand.

Um besonders vorteilhafte Eigenschaften zu erhalten kann es bevorzugt sein, dass in der ersten Dekorbeschichtungslage die Fraktion (r3= ta/tc) von nicht umgesetzten Thiolgruppen (ta) zu Thiolgruppen, die unter Bildung einer kovalenten Bindung (tc) reagiert haben, 0,11 nicht überschreitet.

Für die erste Dekorbeschichtungslage übersteigt die Halbhöhenspitzenbreite des tan delta 30°C bevorzugt nicht, wobei die tan delta-Spitzentemperatur (Tp) und die Halbhöhenspitzenbreite aus einer Viskoelastizität (tan delta)- Temperaturverteilungskurve erhalten werden, die mit einem viskoelastischen Spektrometer bei einer Frequenz von 1 Hz, einer Anfangsspannung von 1%, eine Amplitude von 15 µm und eine Temperaturerhöhungsrate von 5 °C/min bestimmt wird, wobei die Temperaturen gleich und größer als Tp bis zu der Temperatur sind, die durch den Schnittpunkt der Linie von tan delta=1/2P definiert ist, wobei P der Spitzenwert von tan δ ist, mit der Verteilungskurve.

Für die Bestimmung der Halbhöhen-Peakbreite von tan delta ist grundsätzlich die Norm ASTM 1640 anwendbar, wobei die oben beschriebene Methode von der Durchführung dieser Norm hinsichtlich der Temperaturänderung leicht abweicht, wie es anhand der genannten Daten unmittelbar ersichtlich ist.

In einer Ausführungsform liegt die Dicke der in Schritt a hinzugefügten Verbindungen in einem Intervall von 2-100 km.

Die vorstehend beschriebene Dekorbeschichtung kann wie folgt ausgebildet beziehungsweise auf das Dekor aufgebracht werden, wobei ein entsprechendes Verfahren die folgenden Schritte umfasst:
a) zumindest teilweises Aufbringen auf das Dekor von wenigstens einem von:
   A - i. eine Verbindung, die mindestens zwei Thiolgruppen enthält, ii. eine Verbindung, die mindestens zwei Kohlenstoff-Kohlenstoff-Doppelbindungen enthält, und iii. eine Verbindung, die mindestens zwei Epoxidgruppen enthält, und
   B - i. eine Verbindung, die mindestens zwei Thiolgruppen enthält, ii. eine Verbindung, die mindestens eine Kohlenstoff-Kohlenstoff-Doppelbindung und mindestens eine Epoxidgruppe enthält,
   wobei das Verhältnis (r1=t/cc) der Gesamtzahl der Thiolgruppen (t) in allen obigen Verbindungen und der Gesamtzahl der Kohlenstoff-Kohlenstoff-Doppelbindungen (cc) in allen der obigen Verbindungen ausgewählt ist aus der Gruppe bestehend aus 0.1 ≤ r1 ≤ 0,9 und 1,1 ≤ r1 ≤ 20, mit der Maßgabe, dass, wenn das Verhältnis r1 im Intervall0.1 ≤ r1 ≤ 0,9 liegt, wird mindestens eine homopolymerisierende En-Verbindung verwendet, wobei das Verhältnis (r2=t/e) der Gesamtzahl der Thiolgruppen (t) in allen obigen Verbindungen und der Gesamtzahl der Epoxidgruppen (e) in allen obigen Verbindungen im Bereich 0.3 ≤ r2 ≤ 20 liegt,
b) Initiieren einer Reaktion von mindestens einem Teil der aufgetragenen Verbindung, die mindestens zwei Thiolgruppen umfasst, mit mindestens einem von
   - i mindestens einem Teil der aufgetragenen Verbindung, die mindestens zwei Kohlenstoff-Kohlenstoff-Doppelbindungen umfasst, und
   - ii mindestens einem Teil der aufgetragenen Verbindung, die mindestens zwei Epoxidgruppen umfasst,
   - iii mindestens einem Teil der aufgebrachten Verbindung, die mindestens eine Kohlenstoff-Kohlenstoff-Doppelbindung und mindestens eine Epoxidgruppe umfasst,
   um eine zumindest teilweise Zwischenbeschichtung zu erhalten, wobei die Beschichtung mindestens eine Verbindung umfasst, die eine nicht umgesetzte Gruppe umfasst, die aus der Gruppe ausgewählt ist, die aus einer nicht umgesetzten Thiolgruppe und einer nicht umgesetzten Epoxidgruppe besteht,
c) Initiieren einer Reaktion von mindestens einem Teil der mindestens einen Verbindung, die eine nicht umgesetzte Gruppe umfasst, wobei mindestens eine weitere Beschichtung an mindestens einem Punkt, ausgewählt aus der Gruppe bestehend aus nach Schritt b) und nach Schritt c), aufgebracht wird, um die vollständige Dekorbeschichtung zu erhalten.

Die Verhältnisse r1, r2 und r3 werden als Zahlenverhältnisse auf der Grundlage der Verbindungen berechnet, die unter die allgemeinen Definitionen etwa von Verbindungen in Schritt a fallen. D.h. für r1 wird die Anzahl der Thiolgruppen t in allen Verbindungen, die unter die genannten Verbindungen fallen, gezählt, ebenso die Anzahl der

Anzahl der Kohlenstoff-Kohlenstoff-Doppelbindungen cc (En-Gruppen) in allen Verbindungen, die unter die genannten Verbindungen fallen, gezählt werden. Dann wird das Verhältnis r1 = t/cc berechnet. Wenn z. B. eine Verbindung nur eine Thiolgruppe enthält, fällt sie nicht unter die Verbindungen und wird daher nicht gezählt.

Wenn das Verhältnis r1 im Intervall 0.1 ≤ r1 ≤ 0.9 liegt, wird mindestens eine homopolymerisierende En-Verbindung in der Beschichtung verwendet. Sie wird zusammen mit den anderen Bestandteilen der Grundierungsbeschichtung zugegeben. In einer Ausführungsform ist die mindestens eine homopolymerisierende En-Verbindung ausgewählt aus der Gruppe bestehend aus Acrylat und Methacrylat. Eine En-Verbindung enthält eine Kohlenstoff-Kohlenstoff-Doppelbindung.

Bevorzugt wird die Reaktion zwischen mindestens einem Teil der aufgetragenen Verbindung, die mindestens zwei Thiolgruppen umfasst, und mindestens einem Teil der aufgetragenen Verbindung, die mindestens eine oder zwei Kohlenstoff-Kohlenstoff-Doppelbindungen umfasst, mit mindestens einem aus der Gruppe bestehend aus aktinischer Strahlung und erhöhter Temperatur ausgewählten Mittel eingeleitet.

Weiter bevorzugt wird die Reaktion der mindestens einen Verbindung, die eine nicht umgesetzte Gruppe umfasst, die aus der Gruppe ausgewählt ist, die aus einer nicht umgesetzten Thiolgruppe und einer nicht umgesetzten Epoxidgruppe besteht, mit mindestens einer Komponente eingeleitet, wobei die Komponente aus der Gruppe ausgewählt ist, die aus aktinischer Strahlung und erhöhter Temperatur besteht.

Ferner kann die Reaktion der mindestens einen Verbindung, die eine nicht umgesetzte Gruppe umfasst, die aus der Gruppe ausgewählt ist, die aus einer nicht umgesetzten Thiolgruppe und einer nicht umgesetzten Epoxidgruppe besteht, mit einer basischen Verbindung eingeleitet werden.

In einer Ausführungsform wird die Reaktion in Schritt b) und/oder Schritt c) mit einem Initiator eingeleitet. Beispiele für Initiatoren, die Radikale erzeugen, sind unter anderem Rose Bengal (Aldrich), Darocur 2959 (2-Hydroxy-1-[4-(hydroxyethoxy)phenyl]-2-methyl-1-propanon, D2959, Ciba-Geigy), Irgacure 651 (2,2-Dimethoxy-2-phenyIacetophenon, 1651, DMPA, Ciba-Geigy), Irgacure 184 (1-Hydroxycyclohexylphenylketon, 1184, Ciba-Geigy), Irgacure 907 (2-Methyl-1-[4-(methylthio)phenyI]-2-(4-morpholinyl)-1-propanon, 1907, Ciba-Geigy), Campherchinon (CQ, Aldrich), Isopropylthioxanthon (Quantacure ITX, Great Lakes Fine Chemicals LTD., Cheshire, England), Kip 100 und 150 von Fratelli-Lamberti, Darocur 1173 2-Hydroxy-2-methyl-1- phenyl-propan-1-on (Ciba Spezialitätenchemie), und Phosphinoxide wie lrgacure Bis(2,4,6-trimethylbenzoyl)-phenylphosphinoxid 819 (Ciba). CQ wird in der Regel in Verbindung mit einem Amin wie 4-N,N-Dimethylaminobenzoat (4EDMAB, Aldrich) oder Triethanoiamin (TEA, Aldrich) verwendet, um die Polymerisation einzuleiten. Für den anionischen Schritt wird ein photolatentes DBN von BASF bevorzugt. Photolatentes DBN wird in der Regel in Verbindung mit Benzophenon oder ITX verwendet.

Beispielsweise werden die Schritte b) und c) gleichzeitig eingeleitet. Alternativ dazu kann zuerst Schritt b) und danach Schritt c) eingeleitet werden. Alternativ wird zunächst Schritt c) und anschließend Schritt b) eingeleitet. Die in Schritt b) eingeleitete Reaktion ist relativ schnell und die in Schritt )c eingeleitete Reaktion ist relativ langsam, wobei sich schnell und langsam auf die andere Reaktion bezieht, d. h. die Reaktion in Schritt b) ist schneller als die Reaktion in Schritt c). Wenn sowohl die Reaktion in Schritt b) als auch die Reaktion in Schritt c) abgeschlossen ist, haben mehr als 90 % der Thiolgruppen reagiert und kovalente Bindungen gebildet. Häufig bilden mehr als 95 % der Thiolgruppen oder sogar mehr als 99 % der Thiolgruppen kovalente Bindungen.

In einer Ausführungsform liegt das Thiol im stöchiometrischen Überschuss gegenüber der En- bzw. Epoxidkomponente und insgesamt stöchiometrisch in Bezug auf Thiol zu En plus Epoxid vor. En bezieht sich auf eine Kohlenstoff-Kohlenstoff-Doppelbindung. Nach dem Aufbringen der ersten Dekorbeschichtungslage wird etwa durch aktinische Strahlung oder mäßige Wärme eine radikalisch vermittelte Thiol-Enen-Polymerisation eingeleitet, und es bildet sich ein teilpolymerisiertes halbfestes oder festes Polymer mit vielen reaktiven Thiol- und Epoxidgruppen, die in dem teilpolymerisierten Polymer verteilt sind.

Je nach den Prozessanforderungen wird die zweite Reaktion gleichzeitig mit der radikalisch vermittelten Polymerisation oder in einem nachfolgenden separaten Initialisierungsvorgang eingeleitet. In einer Ausführungsform wird die zweite Reaktion anionisch bei einem pH-Wert über 7 eingeleitet.

Beispielsweise wird, nachdem die erste Dekorbeschichtungslage aufgebracht und durch radikalisch vermittelte Thiol-En-Polymerisation gehärtet wurde, eine zweite Schicht, die von ähnlicher oder gleicher Zusammensetzung wie die erste Schicht sein kann, oder eine andere Zusammensetzung, die entweder mit Thiolen, z. B. Acrylat- oder Methacrylat-funktionellen Präpolymeren, oder Epoxiden, z. B. Anhydrid-, Thiol-, Isocyanat- oder Amin-funktionellen Präpolymeren, reaktiv ist, auf die erste Beschichtung aufgebracht. Diese weitere Schicht entspricht dann der zweiten Dekorbeschichtungslage.

Beispielsweise wird nach der zweiten Beschichtung, also nach dem Aufbringen der zweiten Dekorbeschichtungslage, typischerweise aktinische Strahlung oder Wärme angewendet, um eine radikalische Aushärtung der zweiten Dekorbeschichtungslage einzuleiten, woraufhin kovalente Verbindungen zu den in der ersten Schicht verbleibenden Thiol-Seitengruppen gebildet werden. Alternativ wird die zweite Aushärtungsreaktion gleichzeitig mit der ersten Aushärtungsreaktion oder vor dem Aufbringen der zweiten Dekorbeschichtungslage eingeleitet; da die erste Aushärtungsreaktion jedoch schneller verläuft als die zweite, wird die erste Aushärtungsreaktion zuerst abgeschlossen. Beispielsweise wird die zweite Aushärtungsreaktion nach dem Aufbringen der zweiten Schicht abgeschlossen.

Optional können in entsprechender Weise weitere Schichten beziehungsweise weitere Dekorbeschichtungslagen hinzugefügt werden, bis die gewünschte Beschichtung erreicht ist.

Nach Abschluss der Aushärtung der letzten Schicht, also insbesondere der zweiten Dekorbeschichtungslage, wird die zweite Epoxid-Thiol-Reaktion, die entweder durch Wärme oder aktinische Strahlung eingeleitet wird, zu Ende geführt, um die endgültigen mechanischen und chemischen Eigenschaften zu erzielen. Alternativ wird die zweite Epoxid-Thiol-Reaktion durch Zugabe einer starken Base bei Raumtemperatur eingeleitet.

Die zweite Dekorbeschichtungslage umfasst bevorzugt mindestens eine Verbindung, die aus der Gruppe ausgewählt ist, die aus einer Verbindung besteht, die mit einem Thiol unter Bildung einer kovalenten Bindung reaktiv ist, und einer Verbindung, die mit einem Epoxid unter Bildung einer kovalenten Bindung reaktiv ist.

Beispielsweise umfasst die zweite Dekorbeschichtungslage mindestens eine Verbindung, die mindestens eine chemische Gruppe umfasst, die aus der Gruppe ausgewählt ist, die aus einer Hydroxylgruppe, einer Amingruppe, einer Thiolgruppe, einer Anhydridgruppe, einer Cyanoacrylatgruppe, einer Epoxidgruppe und einem Metalloxid besteht.

Alternativ oder zusätzlich umfasst die zweite Dekorbeschichtungslage mindestens eine Verbindung, die eine chemische Gruppe umfasst, die aus der Gruppe ausgewählt ist, die aus einem Acrylat, einem Methacrylat, einem Thiol, einem Isocyanat, einem Maleat, einem Fumarat, einem Vinylether, einem Alken, einem Alkin und einem Allylether besteht.

Es kann ferner bevorzugt sein, dass die zweite Dekorbeschichtungslage mindestens einen Stoff aufweist, der aus der Gruppe ausgewählt ist, die aus einem Metall, einer Polymerfolie und einem Pulver besteht.

Hinsichtlich der ersten Dekorbeschichtungslage kann es bevorzugt sein, dass diese mindestens eine Verbindung umfasst, die ausgewählt ist aus der Gruppe bestehend aus Pentaerythitoltetrakis(2-Mercaptoacetat); Pentaerythritoltetramercaptopropionat (PETMP); 1-Octanthiol; Butyl-3-Mercaptopropionat; 2,4,6-Trioxo-1,3,5-Triazina-Triy(Triethyltris(3-Mercapto-Propionat); 1,6-Hexandiol; 2,5-Dimercaptomethyl-1,4-dithian; Pentaerythritoltetramercaptoacetat, Trimethylolpropantrimercaptoacetat; 2,3-Dimercapto-1-Propanol; 2,3-(Dimercaptoethythio)-1-Mercaptopropan; 1,2,3-Trimercaptopropan; Toluoldithiol; Xylylendithiol; 1,8-Octandithiol und Trimethylolpropantris(3-Mercaptopropionat) ; und Glykoldimercaptopropionat und Pentaerythritoltetramercaptopropionat (PETMP), wobei mindestens eine Thiolgruppe eine kovalente Bindung mit mindestens einer Gruppe, ausgewählt aus einer Kohlenstoff-Kohlenstoff-Doppelbindung und einer Epoxidgruppe, gebildet hat.

Alternativ oder zusätzlich kann es bevorzugt sein, dass die erste Dekorbeschichtungslage mindestens eine Verbindung umfasst, die ausgewählt ist aus der Gruppe bestehend aus Triallyl-1,3,5-Triazin-2,4,6(1H,3H,SH)-trion; Triethylenglykoldivinylether (TEGDVE); Trimethylolpropandiallylether; 1,6-Heptadiyn; 1,7-Octadiyn; Bis-2,2-[4-(2-[Norborn-2-en-5-carboxylat]ethoxy)phenyl]propan (BPAEDN); 1,6-Hexandiol-di-(endo,exo-norborn-2-en-5-carboxylat) (HDDN); Trimethylolpropantri-(norborn-2-en-5-carboxylat) (TMPTN); Pentaerythritoltri-(norborn-2-en-5-carboxylat) (PTN3); Pentaerythritoltetra-(norborn-2-en-5-carboxylat) (PTN4); Tricyclodecandimethanol-di-(endo, exo-norborn-2-en-5-carboxylat) (TCDMDN); und Di(trimethylolpropan)tetra-(norbom-2-en-5-carboxylat) (DTMPTN), wobei mindestens eine Kohlenstoff-Kohlenstoff-Doppelbindung eine kovalente Bindung mit mindestens einer aus einer Thiolgruppe und einer Epoxidgruppe ausgewählten Gruppe gebildet hat.

Es kann weiterhin bevorzugt sein, dass die erste Dekorbeschichtungslage mindestens eine Verbindung umfasst, die aus der Gruppe ausgewählt ist, bestehend aus aus Tris(2,3-epoxidepropyl)isocyanurat; Trimethylolpropantriglycidylether; Tris(4-hydroxyphenyl)methantriglycidylether; Poly(ethylenglykol)diglycidylether; Bisphenol-A-diglycidylether; 1,2,5,6-Diepoxidecyclooctan; 1,2,7,8-Diepoxideoctan; 1,2-Epoxid-5-hexen; 1,4-Cyclohexandimethanol-Diglycidylether; 3,4-Epoxidcyclohexylmethyl-3,4-Epoxidcyclohexancarboxylat; 4,4'-Methylenbis(N,N-diglycidylanilin); Bis[4-(glycidyloxy)phenyl]methan; Bis[4-(glycidyloxy)phenyl]methan; Diglycidyl-1,2-cyclohexandicarboxylat; N,N-Diglycidyl-4-glycidyloxyanilin; Neopentylglycol-Diglycidylether; Resorcinol-Diglycidylether und Tris(4-hydroxyphenyl)methan-Triglycidylether, wobei mindestens eine Epoxidgruppe eine kovalente Bindung mit mindestens einer Gruppe, ausgewählt aus einer Thiolgruppe und einer Kohlenstoff-Kohlenstoff-Doppelbindung, gebildet hat.

Durch das Vorsehen einer derartigen Dekorbeschichtung kann es auf einfache Weise erreicht werden, dass die auf die Dekorbeschichtung aufgebrachte Deckschicht oder die auf die Dekorbeschichtung aufgebrachte Dekorschicht besonders sicher haftet. Ferner haftet auch die Dekorbeschichtung besonders fest auf der darunter liegenden Schicht, also dem Kunststoffträger oder der Dekorschicht. Insbesondere kann auf das Vorsehen weiterer Haftvermittler verzichtet werden, was den Aufbau des Wand- oder Bodenpaneels besonders einfach und kostengünstig gestalten kann.

Somit hat sich gezeigt, dass die beschriebene Dekorbeschichtung als Zwischenschicht dienen kann, welche nicht nur selbst sicher und verlässlich haftet, sondern auch eine weitere Schicht sicher auf der Dekorbeschichtung haften kann.

In Überraschender Weise ist die Beschichtung des Wand- oder Bodenpaneels auch dann besonders langzeitstabil, wenn hohe Belastungen auftreten. Dies ist insbesondere bei Bodenbelägen der Fall, da diese oftmals hoch beansprucht werden und auch bei entsprechenden hohen Beanstandungen die Beschichtungen stabil bleiben müssen. Entsprechend hat es sich gezeigt, dass die Dekorbeschichtung auch in besonders vorteilhafter Weise den Beanspruchungen eines Wand- oder Bodenpaneels standhalten kann.

Dies kann beispielsweise dadurch ermöglicht werden, dass durch die vorstehend definierten kovalenten Bindungen eine ausgezeichnete Haftfestigkeit erreicht wird. Ein weiterer Vorteil kann darin gesehen werden, dass aufgrund einer großen Anzahl von Wasserstoffbrückenbindungen und sehr hoher Vernetzungsdichten hervorragende mechanische Eigenschaften im Vergleich zu stöchiometrischen oder stöchiometrischen Thiolenen mit höherer ultimativer Tg und höherem Elastizitätsmodul erzielt werden können.

Schmale Tan-delta-Spitzen erweitern den Gebrauchstemperaturbereich bis nahe an den Tg.

Die einstellbare Tg und der Elastizitätsmodul ermöglichen eine Optimierung der Primerformulierung in Bezug auf den Elastizitätsmodul des Substrats. Dies erlaubt eine besonders gute Anpassbarkeit an die gewünschten Produkteigenschaften.

Die im Vergleich zu Standard-Acrylatformulierungen hohe Bruchdehnung ermöglicht Beschichtungen, die kleinen Verformungen ohne Rissbildung standhalten.

Die im Vergleich zu kationisch härtenden Systemen geringere Feuchtigkeitsempfindlichkeit ermöglicht eine gleichmäßige Beschichtungsqualität bei unterschiedlichen Umgebungsbedingungen. Entsprechend ergeben sich insbesondere in Kombination mit dem verwendeten Kunststoffträger synergistische Effekte hinsichtlich einer vorteilhaften Feuchteresistenz.

Beispielsweise liegt die Dicke der Dekorbeschichtung in einem Bereich von 0,01-2000 µm. Die Dicke der Dekorbeschichtung ist dabei die Gesamtdicke sämtlicher Dekorbeschichtungslagen. Die Dicke der ersten Dekorbeschichtungslage liegt beispielsweise im Bereich von 0,005-500 µm. Die Dicke der zweiten Dekorbeschichtungslage liegt beispielsweise im Intervall 0,005-1500 µm. Die in diesem Absatz genannte Dicke der Beschichtungen bezieht sich auf die Dicke nach Abschluss der Härtungsreaktionen.

Es kann bevorzugt sein, dass die Dekorbeschichtung zwischen dem Kunststoffträger und der Dekorschicht angeordnet und in direktem Kontakt mit dem Kunststoffträger ist. Es hat sich gezeigt, dass insbesondere der Kontakt des Kunststoffträgers mit der beschriebenen Dekorbeschichtung eine gute Haftung der Dekorbeschichtung an dem Kunststoffträger ermöglicht.

So kann etwa durch eine Coronabehandlung oder auch andere Vorbehandlungen eine gute physikalische Haftung der Beschichtung auf dem Kunststoffträger ermöglicht werden.

Darüber hinaus kann insbesondere eine Kombination des Kunststoffträgers aus einem polymeren Matrixmaterial, etwa einem Polyalkylen, und einem insbesondere mineralischen Füllstoff, etwa Talkum, als Feststoffmaterial eine weitergehende vorteilhafte Haftung ermöglicht werden.

So kann zum einen das Feststoffmaterial eine weitere Bindungskomponente beziehungsweise Haftungskomponente ausbilden dadurch, dass dieses meist hygroskopische beziehungsweise saugfähige Eigenschaften aufweist. Dadurch kann bei einem Auftrag der Dekorbeschichtung insbesondere in flüssiger Form die Beschichtung eine innige Verbindung zu dem Feststoffmaterial aufbauen, so dass dadurch die Haftung verbessert werden kann.

Darüber hinaus kann insbesondere die Thiol-Komponente in der Dekorbeschichtung mit dem Kunststoffträger zum Ausbilden weiterer kovalenten Bindungen reagieren. Dies etwa dadurch, dass polymere Bindungen des Kunststoffs, etwa eines Polyalkylens, beispielsweise Polyethylen oder Polypropylen, aufgebrochen werden, so dass eine Reaktivität zu dem Thiol entstehen kann. Dies kann etwa durch einen etwa vorbeschriebenen insbesondere radikalischen Initiator, erreicht werden. Dadurch können hinsichtlich des Thiols der Dekorbeschichtung reaktive Dimere, Trimere oder Oligomere entstehen, so dass eine besonders stabile kovalente Bindung zwischen der Dekorbeschichtung und dem Kunststoffträger erzeugt werden.

Alternativ oder zusätzlich zu der vorbeschriebenen Anordnung der Dekorbeschichtung kann es vorteilhaft sein, dass die Dekorbeschichtung zwischen der Dekorschicht und der Deckschicht angeordnet ist. In dieser Ausgestaltung kann insbesondere ein sehr guter Haftvermittler zwischen der Dekorschicht und der Deckschicht ermöglicht werden. Dadurch kann es sicher verhindert oder die Gefahr zumindest deutlich reduziert werden, dass sich aufgrund der sehr hohen Belastungen bei Wand- oder Bodenpaneelen die Deckschicht löst oder anderweitige Beschädigungen auftreten.

Die vorbeschriebene Deckschicht kann auch als Schutzschicht oder Verschließschicht benannt werden und dient dazu, eine langzeitstabile oberste Lage zu schaffen. Eine Deckschicht etwa zum Schutz des aufgebrachten Dekors kann somit insbesondere als Verschleiß- oder Deckschicht oberhalb der Dekorschicht beziehungsweise oberhalb und bevorzugt unmittelbar auf der Dekorbeschichtung in einem nachfolgenden Verfahrensschritt aufgebracht werden, welche insbesondere die Dekorschicht vor Abnutzung oder Beschädigung durch Schmutz, Feuchtigkeitseinfluss oder mechanische Einwirkungen, wie beispielsweise Abrieb, schützt.

Es kann bevorzugt sein, dass zur Ausbildung der Deckschicht ebenfalls eine strahlungshärtbare Zusammensetzung, wie beispielsweise ein strahlungshärtbarer Lack, wie einem Acryllack, verwendet wird. Dabei kann es vorgesehen sein, dass die Verschleißschicht Hartstoffe wie beispielsweise Titannitrid, Titancarbid, Siliciumnitrid, Siliciumcarbid, Borcarbid, Wolframcarbid, Tantalcarbid, Aluminiumoxid (Korund), Zirconiumoxid oder Mischungen dieser aufweist, um die Verschleißfestigkeit der Schicht zu erhöhen. Dabei kann die Auftragung beispielsweise mittels Walzen, wie Gummiwalzen oder mittels Gießvorrichtungen aufgetragen werden.

Weiterhin kann die Deckschicht zunächst teilgehärtet werden und im Anschluss eine Endlackierung mit einem Urethanacrylat und eine Endhärtung, etwa mit einem Galliumstrahler, durchgeführt werden.

Ferner kann die Deckschicht Mittel zur Verringerung der statischen (elektrostatischen) Aufladung des letztendlichen Wand- oder Bodenpaneels aufweisen. Beispielsweise kann es dazu vorgesehen sein, dass die Deck- und/oder Verschleißschicht Verbindungen wie z.B. Cholinchlorid aufweist. Das Antistatikmittel kann dabei beispielsweise in einer Konzentration zwischen ≥ 0,1 Gew.-% und ≤ 40,0 Gew.-%, bevorzugt zwischen ≥ 1,0 Gew.-% und ≤ 30,0 Gew.-% in der Deck- und/oder Zusammensetzung zur Ausbildung der Verschleißschicht enthalten sein.

Bevorzugt kann in die Deckschicht eine Strukturierung, insbesondere eine mit dem Dekor übereinstimmende Oberflächenstrukturierung durch das Einbringen von Poren eingebracht werden. Insbesondere hierzu kann es bevorzugt vorgesehen sein, dass als Deckschicht eine härtbare Zusammensetzung aufgetragen wird und ein Aushärtungsprozess nur in dem Maße erfolgt, dass lediglich eine Teilhärtung der Deck- und/oder Verschleißschicht sattfindet. In die so teilgehärtete Schicht wird mittels geeigneter Werkzeuge, wie beispielsweise einer Hartmetall-Strukturwalze oder eines Stempels während oder nach dem Kalibrierschritt, eine gewünschte Oberflächenstruktur eingeprägt. Dabei erfolgt die Prägung in Übereinstimmung mit dem aufgebrachten Dekor. Zur Gewährleistung einer hinreichenden Übereinstimmung der einzubringenden Struktur mit dem Dekor kann es vorgesehen sein, dass der Träger und das Prägewerkzeug durch entsprechende Relativbewegungen zueinander ausgerichtet werden. Im Anschluss an die Einbringung der gewünschten Struktur in die teilgehärtete Deckschicht erfolgt eine weitere Härtung der nun strukturierten Deckschicht.

Alternativ oder zusätzlich kann es vorgesehen sein, dass die Trägerplatte beziehungsweise der Kunststoffträger bereits eine Strukturierung aufweist, da die weiteren Schichten im Wesentlichen in flüssiger Form aufgebracht werden können und sich eine Struktur in dem Kunststoffträger auch in der Deckschicht zeigt. Dann kann zur Erzeugung einer Synchronpore eine Ausrichtung eines Druckwerkzeuges zur Aufbringung des Dekors und der Trägerplatte zueinander in Abhängigkeit mittels der mittels optischer Verfahren erfassten Strukturierung der Trägerplatte erfolgen. Zur Ausrichtung des Druckwerkzeuges und der Trägerplatte zueinander kann es dabei vorgesehen sein, dass eine zur Ausrichtung notwendige Relativbewegung zwischen Druckwerkzeug und Trägerplatte zueinander durch eine Verschiebung der Trägerplatte oder durch eine Verschiebung des Druckwerkzeugs erfolgt.

Wie vorstehend angedeutet hat es sich auf überraschende Weise gezeigt, dass die Dekorbeschichtung eine besonders vorteilhafte Haftqualität der Deckschicht an der Dekorschicht ermöglicht und das erfindungsgemäße Wand- oder Bodenpaneel so auch den mit einer entsprechenden Anwendung auftretenden harschen Bedingungen problemlos widerstehen kann.

Hinsichtlich weiterer technischer Merkmale und Vorteile des Wand- oder Bodenpaneels wird hiermit explizit auf die Beschreibung der Verwendung sowie auf die Figuren Bezug genommen.

Gegenstand der vorliegenden Erfindung ist ferner eine Verwendung einer Beschichtung als Dekorbeschichtung, wobei die Dekorbeschichtung in einem Wand- oder Bodenpaneel vorliegt, aufweisend einen Kunststoffträger, eine mittels Digitaldruck auf den Kunststoffträger aufgebrachte Dekorschicht und eine Deckschicht, wobei die Beschichtung folgendes umfasst:
- eine erste Dekorbeschichtungslage und eine zweite Dekorbeschichtungslage, wobei
- in der ersten Dekorbeschichtungslage kovalente Bindungen, die durch Reaktion einer Thiolgruppe und einer Kohlenstoff-Kohlenstoff-Doppelbindung gebildet werden, kovalente Bindungen, die durch Reaktion einer Thiolgruppe und einer Epoxidgruppe gebildet werden, und kovalente Bindungen, die durch eine Reaktion zwischen einer Kohlenstoff-Kohlenstoff-Doppelbindung und einer Epoxidgruppe entstehen, vorliegen, wobei
- die erste Dekorbeschichtungslage kovalente Querverbindungen zwischen in der ersten Dekorbeschichtungslage vorhandenen Verbindungen umfasst, und wobei
- kovalente Bindungen zwischen der ersten Dekorbeschichtungslage und der zweiten Dekorbeschichtungslage vorliegen.

Wie vorstehend beschrieben hat es sich auf überraschende Weise gezeigt, dass die Dekorbeschichtung eine besonders vorteilhafte Haftqualität der Dekorbeschichtung auf dem Untergrund, auf dem sie aufgebracht ist, aufweist und ferner eine gute Haftung einer weiteren Schicht auf der Dekorbeschichtung möglich ist. Beispielsweise kann es von Vorteil sein, dass die Dekorbeschichtung zwischen dem Kunststoffträger und der Dekorschicht angeordnet und in direktem Kontakt mit dem Kunststoffträger ist, und/oder dass die die Dekorbeschichtung zwischen der Dekorschicht und der Deckschicht angeordnet ist. Das erfindungsgemäße Wand- oder Bodenpaneel kann so auch den mit einer entsprechenden Anwendung auftretenden harschen Bedingungen problemlos widerstehen kann. Entsprechend bietet insbesondere die Verwendung der beschriebenen Beschichtung als Dekorbeschichtung in einem Wand- oder Bodenpaneel deutliche Vorteile.

Es kann auf weitere Haftvermittler zwischen dem Kunststoffträger und der Dekorschicht beziehungsweise der Dekorschicht und der Deckschicht verzichtet werden, was die Einfachheit der Herstellung verbessert.

Hinsichtlich weiterer technischer Merkmale und Vorteile der Verwendung wird hiermit explizit auf die Beschreibung des Wand- oder Bodenpaneels sowie auf die Figuren Bezug genommen.

Die Erfindung ist nachfolgend anhand der Figuren sowie eines Ausführungsbeispiels weiter erläutert.

Fig. 1 zeigt schematisch einen Querschnitt durch ein Wand- oder Bodenpaneel gemäß einer Ausgestaltung der vorliegenden Erfindung; und

Fig. 2 zeigt schematisch einen Querschnitt durch ein Wand- oder Bodenpaneel gemäß einer weiteren Ausgestaltung der vorliegenden Erfindung.

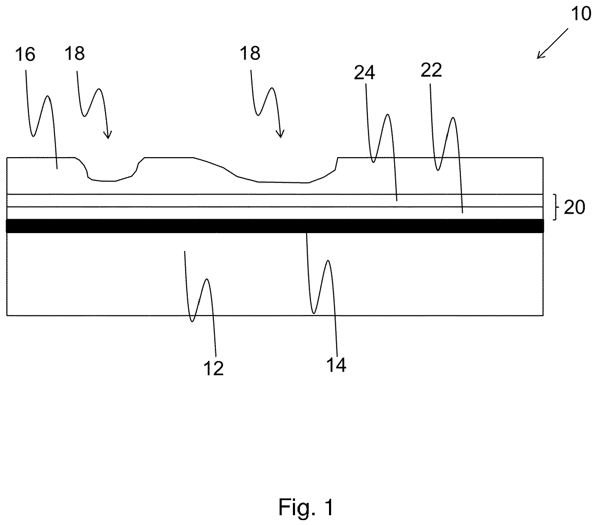

In der Figur 1 ist ein Wand- oder Bodenpaneel 10 gezeigt. Dieses dient insbesondere dem Herstellen eines Bodenbelags oder eines Wandbelags und kann hierzu etwa an seinen Seiten Verriegelungselemente aufweisen, welche für eine vereinfachte Ansicht nicht gezeigt sind. Derartige Verriegelungselemente sind dem Fachmann grundsätzlich bekannt.

Das Wand- oder Bodenpaneel 10 umfasst einen Aufbau mit den folgenden Schichten.

Zunächst umfasst das Wand- oder Bodenpaneel einen Kunststoffträger 12, der wie an sich bekannt ausgebildet sein kann. Beispielsweise kann der Kunststoffträger 12 ein Trägermaterial umfasse, wobei das Trägermaterial ein Matrixmaterial und ein Feststoffmaterial aufweist, wobei das Matrixmaterial in einer Menge, bezogen auf das Trägermaterial, von ≥ 25 Gew.-% bis ≤ 55 Gew.-% vorliegt und wobei das Feststoffmaterial in einer Menge, bezogen auf das Trägermaterial, von ≥ 45 Gew.-% bis ≤ 75 Gew.-% vorliegt, und wobei das Matrixmaterial und das Feststoffmaterial gemeinsam, bezogen auf das Trägermaterial, in einer Menge von ≥ 95 Gew.-% vorliegen. Das Matrixmaterial ist dabei das Kunststoffmaterial beziehungsweise das Polymermaterial und kann grundsätzlich wählbar ausgestaltet sein.

Ferner ist das Wand- oder Bodenpaneel 10 direkt bedruckt. Es umfasst somit eine mittels Digitaldruck auf den Kunststoffträger 12 aufgebrachte Dekorschicht 14. Diese kann insbesondere durch einen Laserdrucker aufgebracht sein und etwa strahlungshärtbare beziehungsweise strahlungsgehärtete Tinte aufweisen.

Weiterhin ist eine Deckschicht 16 vorgesehen, welche ebenfalls strahlungshärtbar beziehungsweise strahlungsgehärtet sein kann und etwa einen entsprechenden Lack aufweisen kann. Die Deckschicht 16 kann auch als Verschleißschicht beschrieben werden und das Paneel vor Abrieb beziehungsweise vor Beschädigungen schützen. Um einen haptisch vorteilhaften Eindruck zu erhalten, ist in der Deckschicht 16 eine Strukturierung vorgesehen, welche etwa Synchronporen 18 aufweist. Gemeinsam mit der Dekorschicht 14 kann so ein vorlagenähnlicher oder vorlagenidentischer Aufbau erzeugt werden.

Weiterhin ist in der Figur 1 zwischen der Dekorschicht 14 und der Deckschicht 16 eine Dekorbeschichtung 20 gezeigt. Die Dekorbeschichtung 20 umfasst dabei
- eine erste Dekorbeschichtungslage 22 und eine zweite Dekorbeschichtungslage 22, wobei
- in der ersten Dekorbeschichtungslage 22 kovalente Bindungen, die durch Reaktion einer Thiolgruppe und einer Kohlenstoff-Kohlenstoff-Doppelbindung gebildet werden, kovalente Bindungen, die durch Reaktion einer Thiolgruppe und einer Epoxidgruppe gebildet werden, und kovalente Bindungen, die durch eine Reaktion zwischen einer Kohlenstoff-Kohlenstoff-Doppelbindung und einer Epoxidgruppe entstehen, vorliegen, wobei
- die erste Dekorbeschichtungslage 22 kovalente Querverbindungen zwischen in der ersten Dekorbeschichtungslage 22 vorhandenen Verbindungen umfasst, und wobei
- kovalente Bindungen zwischen der ersten Dekorbeschichtungslage 22 und der zweiten Dekorbeschichtungslage 24 vorliegen.

Die Figur 1 zeigt somit eine Ausgestaltung, bei der die Dekorbeschichtung 20 zwischen der Dekorschicht 14 und der Deckschicht 16 angeordnet ist.

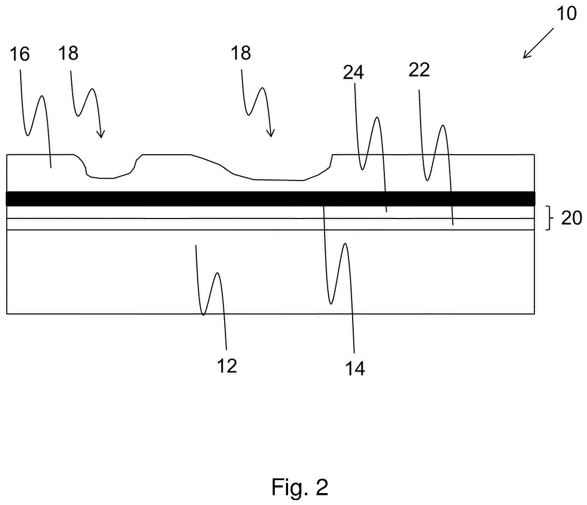

In der Figur 2 ist eine weitere Ausgestaltung der vorliegenden Erfindung gezeigt. Die Ausgestaltung der Figur 2 entspricht dabei in weiten Teilen der Ausgestaltung aus Figur 1, so dass auf die vorstehende Beschreibung verwiesen wird.

Die Figur 2 unterscheidet sich jedoch von der Figur 1 in der Anordnung der Dekorbeschichtung 20. Genauer zeigt Figur 2 eine Ausgestaltung, bei der die Dekorbeschichtung 20 zwischen dem Kunststoffträger 12 und der Dekorschicht 14 angeordnet und in direktem Kontakt mit dem Kunststoffträger 12 ist.

### Bezugszeichen:

- 10: Wand- oder Bodenpaneel
- 12: Kunststoffträger
- 14: Dekorschicht
- 16: Deckschicht
- 18: Synchronpore
- 20: Dekorbeschichtung
- 22: erste Dekorbeschichtungslage
- 24: zweite Dekorbeschichtungslage

## Patentansprüche

1. Wand- oder Bodenpaneel (10), aufweisend einen Kunststoffträger (12), eine mittels Digitaldruck auf den Kunststoffträger (12) aufgebrachte Dekorschicht (14), eine Dekorbeschichtung (20) und eine Deckschicht (16), **dadurch gekennzeichnet, dass** die Dekorbeschichtung (20) folgendes umfasst:
- eine erste Dekorbeschichtungslage (22) und eine zweite Dekorbeschichtungslage (24), wobei
- in der ersten Dekorbeschichtungslage (22) kovalente Bindungen, die durch Reaktion einer Thiolgruppe und einer Kohlenstoff-Kohlenstoff-Doppelbindung gebildet werden, kovalente Bindungen, die durch Reaktion einer Thiolgruppe und einer Epoxidgruppe gebildet werden, und kovalente Bindungen, die durch eine Reaktion zwischen einer Kohlenstoff-Kohlenstoff-Doppelbindung und einer Epoxidgruppe entstehen, vorliegen, wobei
- die erste Dekorbeschichtungslage (22) kovalente Querverbindungen zwischen in der ersten Dekorbeschichtungslage (22) vorhandenen Verbindungen umfasst, und wobei
- kovalente Bindungen zwischen der ersten Dekorbeschichtungslage (22) und der zweiten Dekorbeschichtungslage (24) vorliegen.

2. Wand- oder Bodenpaneel (10) gemäß Anspruch 1, wobei in der ersten Dekorbeschichtungslage (22) die Fraktion (r₃= ta/tc) von nicht umgesetzten Thiolgruppen (ta) zu Thiolgruppen, die unter Bildung einer kovalenten Bindung (tc) reagiert haben, 0,11 nicht überschreitet, wobei für die erste Dekorbeschichtungslage die Halbhöhenspitzenbreite des tan delta 30°C nicht übersteigt, wobei die tan delta-Spitzentemperatur (Tp) und die Halbhöhenspitzenbreite aus einer Viskoelastizität (tan delta)- Temperaturverteilungskurve erhalten werden, die mit einem viskoelastischen Spektrometer bei einer Frequenz von 1 Hz, einer Anfangsspannung von 1%, eine Amplitude von 15 µm und eine Temperaturerhöhungsrate von 5 °C/min bestimmt wird, wobei die Temperaturen gleich und größer als Tp bis zu der Temperatur sind, die durch den Schnittpunkt der Linie von tan delta=1/2P definiert ist, wobei P der Spitzenwert von tan δ ist, mit der Verteilungskurve.

3. Wand- oder Bodenpaneel (10) gemäß Anspruch 1 oder 2, wobei die erste Dekorbeschichtungslage (22) mindestens eine Verbindung umfasst, die ausgewählt ist aus der Gruppe bestehend aus Pentaerythitoltetrakis(2-Mercaptoacetat); Pentaerythritoltetramercaptopropionat (PETMP); 1-Octanthiol; Butyl-3-Mercaptopropionat; 2,4,6-Trioxo-1,3,5-Triazina-Triy(Triethyltris(3-Mercapto-Propionat); 1,6-Hexandiol; 2,5-Dimercaptomethyl-1,4-dithian; Pentaerythritoltetramercaptoacetat, Trimethylolpropantrimercaptoacetat; 2,3-Dimercapto-1-Propanol; 2,3-(Dimercaptoethythio)-1-Mercaptopropan; 1,2,3-Trimercaptopropan; Toluoldithiol; Xylylendithiol; 1,8-Octandithiol und Trimethylolpropantris(3-Mercaptopropionat) ; und Glykoldimercaptopropionat und Pentaerythritoltetramercaptopropionat (PETMP), wobei mindestens eine Thiolgruppe eine kovalente Bindung mit mindestens einer Gruppe, ausgewählt aus einer Kohlenstoff-Kohlenstoff-Doppelbindung und einer Epoxidgruppe, gebildet hat.

4. Wand- oder Bodenpaneel (10) gemäß einem der Ansprüche 1 bis 3, wobei die erste Dekorbeschichtungslage (22) mindestens eine Verbindung umfasst, die ausgewählt ist aus der Gruppe bestehend aus Triallyl-1,3,5-Triazin-2,4,6(1H,3H,SH)-trion; Triethylenglykoldivinylether (TEGDVE); Trimethylolpropandiallylether; 1,6-Heptadiyn; 1,7-Octadiyn; Bis-2,2-[4-(2-[Norborn-2-en-5-carboxylat]ethoxy)phenyl]propan (BPAEDN); 1,6-Hexandiol-di-(endo,exo-norborn-2-en-5-carboxylat) (HDDN); Trimethylolpropantri-(norborn-2-en-5-carboxylat) (TMPTN); Pentaerythritoltri-(norborn-2-en-5-carboxylat) (PTN3); Pentaerythritoltetra-(norborn-2-en-5-carboxylat) (PTN4); Tricyclodecandimethanol-di-(endo, exo-norborn-2-en-5-carboxylat) (TCDMDN); und Di(trimethylolpropan)tetra-(norbom-2-en-5-carboxylat) (DTMPTN), wobei mindestens eine Kohlenstoff-Kohlenstoff-Doppelbindung eine kovalente Bindung mit mindestens einer aus einer Thiolgruppe und einer Epoxidgruppe ausgewählten Gruppe gebildet hat.

5. Wand- oder Bodenpaneel (10) gemäß einem der Ansprüche 1 bis 4, wobei die erste Dekorbeschichtungslage (22) mindestens eine Verbindung umfasst, die aus der Gruppe ausgewählt ist, die aus Tris(2,3-epoxidepropyl)isocyanurat; Trimethylolpropantriglycidylether; Tris(4- hydroxyphenyl)methantriglycidylether; Poly(ethylenglykol)diglycidylether; Bisphenol-A-diglycidylether; 1,2,5,6-Diepoxidecyclooctan; 1,2,7,8-Diepoxideoctan; 1,2-Epoxid-5-hexen; 1,4-Cyclohexandimethanol-Diglycidylether; 3,4-Epoxidcyclohexylmethyl-3,4-Epoxidcyclohexancarboxylat; 4,4'-Methylenbis(N,N-diglycidylanilin); Bis[4-(glycidyloxy)phenyl]methan; Bis[4-(glycidyloxy)phenyl]methan; Diglycidyl-1,2-cyclohexandicarboxylat; N,N-Diglycidyl-4-glycidyloxyanilin; Neopentylglycol-Diglycidylether; Resorcinol-Diglycidylether und Tris(4-hydroxyphenyl)methan-Triglycidylether, wobei mindestens eine Epoxidgruppe eine kovalente Bindung mit mindestens einer Gruppe, ausgewählt aus einer Thiolgruppe und einer Kohlenstoff-Kohlenstoff-Doppelbindung, gebildet hat.

6. Wand- oder Bodenpaneel (10) gemäß einem der Ansprüche 1 bis 5, wobei die zweite Dekorbeschichtungslage (24) mindestens eine Verbindung umfasst, die mindestens eine chemische Gruppe umfasst, die aus der Gruppe ausgewählt ist, bestehend aus einer Hydroxylgruppe, einer Amingruppe, einer Thiolgruppe, einer Anhydridgruppe, einer Cyanoacrylatgruppe, einer Epoxidgruppe und einem Metalloxid.

7. Wand- oder Bodenpaneel (10) gemäß einem der Ansprüche 1 bis 6, wobei die zweite Dekorbeschichtungslage (24) mindestens eine Verbindung umfasst, die eine chemische Gruppe umfasst, die aus der Gruppe ausgewählt ist, bestehend aus einem Acrylat, einem Methacrylat, einem Thiol, einem Isocyanat, einem Maleat, einem Fumarat, einem Vinylether, einem Alken, einem Alkin und einem Allylether.

8. Wand- oder Bodenpaneel (10) gemäß einem der vorhergehenden Ansprüche, wobei der Kunststoffträger (12) ein Trägermaterial umfasst, wobei das Trägermaterial ein Matrixmaterial und ein Feststoffmaterial aufweist, wobei das Matrixmaterial in einer Menge, bezogen auf das Trägermaterial, von ≥ 25 Gew.-% bis ≤ 55 Gew.-% vorliegt und wobei das Feststoffmaterial in einer Menge, bezogen auf das Trägermaterial, von ≥ 45 Gew.-% bis ≤ 75 Gew.-% vorliegt, und wobei das Matrixmaterial und das Feststoffmaterial gemeinsam, bezogen auf das Trägermaterial, in einer Menge von ≥ 95 Gew.-% vorliegen, insbesondere wobei das Feststoffmaterial zu wenigstens 50 Gew.-% bezogen auf das Feststoffmaterial, gebildet ist aus einer Feststoffzusammensetzung bestehend aus wenigstens einem ersten Schichtsilikatpulver und einem zweiten Schichtsilikatpulver, und das Matrixmaterial zu wenigstens 50 Gew.-% bezogen auf das Matrixmaterial, gebildet ist durch eine Kunststoffzusammensetzung bestehend aus einem Homopolymer und wenigstens einem ersten Copolymer und einem zweiten Copolymer.

9. Wand- oder Bodenpaneel (10) gemäß einem der Ansprüche 1 bis 8, wobei die Deckschicht (16) einen strahlungshärtbaren Lack umfasst.

10. Wand- oder Bodenpaneel (10) gemäß einem der Ansprüche 1 bis 9, wobei die Dekorbeschichtung (20) zwischen dem Kunststoffträger (12) und der Dekorschicht (14) angeordnet und in direktem Kontakt mit dem Kunststoffträger (12) ist.

11. Wand- oder Bodenpaneel (10) gemäß einem der Ansprüche 1 bis 10, wobei die Dekorbeschichtung (20) zwischen der Dekorschicht (14) und der Deckschicht (16) angeordnet ist.

12. Verwendung einer Beschichtung als Dekorbeschichtung (20), wobei die Dekorbeschichtung (20) in einem Wand- oder Bodenpaneel (10) vorliegt, aufweisend einen Kunststoffträger (12), eine mittels Digitaldruck auf den Kunststoffträger (12) aufgebrachte Dekorschicht (14) und eine Deckschicht (16), **dadurch gekennzeichnet, dass** die Beschichtung folgendes umfasst:
- eine erste Dekorbeschichtungslage (22) und eine zweite Dekorbeschichtungslage (24), wobei
- in der ersten Dekorbeschichtungslage (22) kovalente Bindungen, die durch Reaktion einer Thiolgruppe und einer Kohlenstoff-Kohlenstoff-Doppelbindung gebildet werden, kovalente Bindungen, die durch Reaktion einer Thiolgruppe und einer Epoxidgruppe gebildet werden, und kovalente Bindungen, die durch eine Reaktion zwischen einer Kohlenstoff-Kohlenstoff-Doppelbindung und einer Epoxidgruppe entstehen, vorliegen, wobei
- die erste Dekorbeschichtungslage (22) kovalente Querverbindungen zwischen in der ersten Dekorbeschichtungslage (22) vorhandenen Verbindungen umfasst, und wobei
- kovalente Bindungen zwischen der ersten Dekorbeschichtungslage (22) und der zweiten Dekorbeschichtungslage (24) vorliegen.
